# EUROPÄISCHE PATENTANMELDUNG

(11) **EP 1 325 844 A2**
(43) Veröffentlichungstag der Anmeldung: **09.07.2003**
(21) Anmeldenummer: 03003953.1
(22) Anmeldetag: 25.02.1999
(51) Int. Cl.: B60R 11/02

(54) **Autoradiogerät für ein Fahrzeug**

(30) Priorität: 11.03.1998 DE 19810451
(62) Teilanmeldung aus: 99103675.7
(71) Anmelder: Grundig Car InterMedia System GmbH, 90471 Nürnberg (DE)
(72) Erfinder: Reiss, Willy Grundig AG, 90471 Nürnberg (DE)
(74) Vertreter: Pröll, Jürgen Dipl.-Ing.

(57) **Zusammenfassung**

Die vorliegende Erfindung betrifft ein Autoradiogerät für ein Fahrzeug, mit einer von einem Touch-Screen gebildeten Frontplatte.

Durch die Verwendung des Touch-Screens bei der vorliegenden Erfindung wird die passive Sicherheit für ein mit dem erfindungsgemäßen Autoradiogerät ausgestattetes Fahrzeug erhöht, weil die Wahrscheinlichkeit eines Einbruchs in das Fahrzeug verringert wird.

## Beschreibung

Die vorliegende Erfindung betrifft ein Autoradiogerät für ein Fahrzeug, mit einer von einem Touch-Screen gebildeten Frontplatte.

Moderne Autoradiogeräte weisen Frontplatten auf, die von einem Touch-Screen gebildet werden. Ein Touch-Screen kann beispielsweise von einer LCD-Anzeige gebildet werden, die berührungsempfindlich ist. Auf der LCD-Anzeige können beispielsweise Schaltelemente wie Tasten oder Schieberegler dargestellt und nachgebildet werden, die durch Berührung der Anzeige betätigt werden können. Mittels des Touch-Screens können alle zur Bedienung des Autoradiogeräts benötigten Schaltelemente sowie Anzeigen, beispielsweise zur Anzeige der jeweiligen Funktion der dargestellten Schaltelemente, angezeigt werden. Ebenso kann die Anzeige für die Darstellung von Einstellungswerten, wie z. B. einer eingestellten Empfangsfrequenz des Autoradios, in bekannter Weise verwendet werden.

Aus DE 38 36 572 C2 ist ein Autoradiogerät mit eine Blende bekannt, das im ausgeschalteten Zustand dem Einbauumfeld entspricht, so daß nicht erkannt werden kann, daß ein Autoradiogerät vorhanden ist.

Aus dem vorstehend beschriebenen Stand der Technik geht allerdings nicht hervor, wie ein Touch-Screen in ein passives Sicherheitskonzept einbezogen werden kann, um die Gefahr eines Einbruchs in das Auto, in dem das Autoradiogerät mit Touch-Screen montiert ist, zu verringern, insbesondere, wenn das Autoradio für unterschiedliche Einbauumfelder geeignet sein soll.

Aufgabe der vorliegenden Erfindung ist es deshalb, ein Autoradiogerät für ein Fahrzeug mit einem Touch-Screen anzugeben, bei dem die passive Sicherheit dadurch erhöht wird, daß durch die Verwendung eines Touch-Screen die Wahrscheinlichkeit eines Diebstahlversuchs und damit eines Einbruchs in das Fahrzeug verringert wird.

Diese Aufgabe wird bei einem erfindungsgemäßen Autoradiogerät für ein Fahrzeug mit einem Touch-Screen durch die Merkmale des Anspruchs 1 gelöst.

Bei dem erfindungsgemäßen Autoradiogerät wird dabei von der Überlegung ausgegangen, daß durch die automatische Darstellung des jeweiligen Einbauumfeldes bei Deaktivierung des Autoradiogeräts das Auffinden des Autoradiogeräts erschwert wird, wodurch die passive Sicherheit erhöht wird, weil die Wahrscheinlichkeit eines Einbruchs in ein das erfindungsgemäße Autoradiogerät enthaltendes Fahrzeug verringert wird.

Die Vorteile der Erfindung liegen insbesondere darin, daß die passive Sicherheit für ein mit dem erfindungsgemäßen Autoradiogerät ausgestattetes Fahrzeug erhöht wird, weil die Wahrscheinlichkeit eines Einbruchs in das Fahrzeug verringert wird.

Weitere Vorteile der vorliegenden Erfindung ergeben sich aus den abhängigen Ansprüchen sowie der nachfolgenden Beschreibung eines Ausführungsbeispiels für ein erfindungsgemäßes Autoradiogerät anhand von Figuren.

Es zeigt:
- Fig. 1: ein Prinzipschaltbild eines erfindungsgemäßen Autoradiogeräts für ein Fahrzeug mit einem Touch-Screen und mit einer Einrichtung zur Ermittlung des Einbauumfelds des Autoradiogeräts, und
- Fig. 2: ein Autoradiogerät mit einem Touch-Screen.

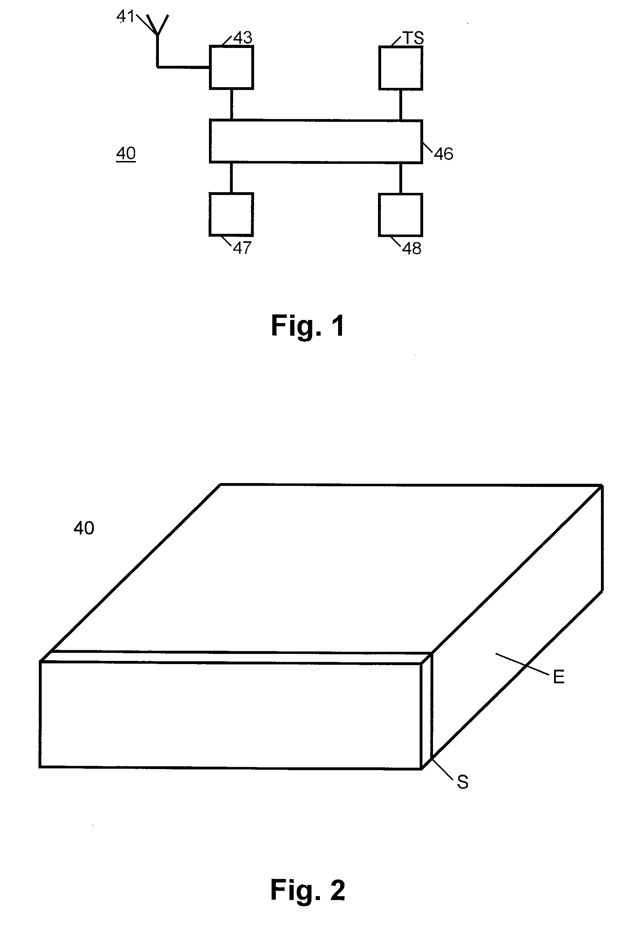

Die Figur 2 zeigt allgemein den Aufbau eines Autoradiogeräts 40 für ein Fahrzeug mit einem Touch-Screen TS. Das Autoradiogerät 40 besteht aus einem Gehäuse E und einer Frontplatte, die von dem Touch-Screen gebildet wird. Die Frontplatte ist mit einem Scharnier S mit dem Gehäuse E verbunden. Durch das Scharnier S wird es ermöglicht, den Touch-Screen TS aufzuklappen oder zu schwenken, um beispielsweise eine Musikkassette in einen hinter dem Touch-Screen TS angeordneten Kassettenrecorder einführen zu können. Das Autoradiogerät 40 kann als Einbaugerät konzipiert sein, wobei das Gehäuse E dann in einen Einschubschacht im Armaturenbrett des Fahrzeug eingeschoben wird.

Figur 1 zeigt ein Prinzipschaltbild einer erfindungsgemäßen Ausführungsform eines Autoradiogeräts 40, mit einem Touch-Screen TS. Das Autoradiogerät 40 weist außerdem einen Tuner 43 mit Antenne 41, eine Einrichtung 47 zur Ermittlung des Einbauumfelds des Autoradiogeräts 40, Lautsprecher 48 und eine Einrichtung 46 zur Steuerung und Signalverarbeitung auf, die mit allen beschriebenen Komponenten verbunden ist. Die Einrichtung 46 enthält unter anderem eine Steuereinrichtung, wie z. B. einen Mikrocomputer, und eine Signalverarbeitungseinrichtung, wie z. B. einen Audiosignalverstärker. Die vom Tuner 43 empfangenen Rundfunksignale werden in der Einrichtung 46 zur Steuerung und Signalverarbeitung verarbeitet und über die Lautsprecher 48 wiedergegeben.

Die Einrichtung 47 zur Ermittlung des Einbauumfelds des Autoradiogeräts, also beispielsweise des Armaturenbrettes des Fahrzeugs, in das das Autoradiogerät eingebaut wird, besteht aus einer Eingabeeinrichtung, mit der ein Code für das jeweilige Fahrzeug eingegeben werden kann. Ebenso kann es vorgesehen sein, daß beim Einbau des Fahrzeugs entsprechende Informationen über das Einbauumfeld automatisch beim Anschluß an das Bordnetz des Fahrzeugs an das Autoradiogerät übergeben werden. Schließlich ist es auch möglich, daß die Einrichtung 47 zur Ermittlung des Einbauumfelds von einem Sensor gebildet wird, der das Aussehen des Einbauumfelds ermittelt.

Immer wenn das Fahrzeug abgestellt wird, wird auf dem Touch-Screen TS das durch die Einrichtung 47 zur Ermittlung des Einbauumfelds ermittelte Aussehen des Einbauumfelds dargestellt. Als Kriterium für das Abstellen des Fahrzeugs kann beispielsweise das Ausschalten der Zündung oder das Abziehen des Fahrzeugschlüssels dienen. Bei Fahrzeugen die über ein Sicherheitssystem verfügen, bei dem im Fahrzeugschlüssel ein Transponder vorhanden ist, kann auch das Entfernen des Fahrzeugschlüssels aus dem Fahrzeug als Kriterium für die Darstellung des Einbauumfelds durch den Touch-Screen TS dienen.

Als Zusatzgerät kann an das oben beschriebenen Autoradiogerät eine oder mehrere Einrichtung zur Entfernungsmessung angeschlossen werden. Die Einrichtungen zur Entfernungsmessung ermitteln bei einem Einparkvorgang die verbleibende Entfernung des mit dem Autoradiogerät ausgestatteten Fahrzeugs von Hindernissen. Die verbleibende Strecke zwischen einem Hindernis und dem Fahrzeug wird auf dem Touch-Screen des Autoradiogeräts als Balken dargestellt, dessen Länge proportional zur ermittelten verbleibenden Strecke ist. Auf diese Weise wird sicheres Einparken ermöglicht, ohne ein Hindernis mit dem Fahrzeug zu berühren.

## Patentansprüche

1. Autoradiogerät (40) für ein Fahrzeug, mit einem Touch-Screen (TS),
**dadurch gekennzeichnet,**
**daß** eine Einrichtung (47) zur Eingabe eines Codes für das Aussehen des Einbauumfelds des Autoradiogeräts (40) vorhanden ist, und daß beim Abstellen des Fahrzeugs durch den Touch-Screen (TS) das Einbauumfeld entsprechend des eingegebenen Codes dargestellt wird.

2. Autoradiogerät (40) nach Anspruch 1,
**dadurch gekennzeichnet,**
**daß** die Einrichtung (47) zur Eingabe des Codes für das Aussehen des Einbauumfelds den Code beim Einbau des Autoradiogeräts (40) in ein Fahrzeug über ein im Fahrzeug vorhandenes Bordnetz erhält.

3. Autoradiogerät (40) nach einem der Ansprüche 1 oder 2,
**dadurch gekennzeichnet,**
**daß** eine oder mehrere Einrichtungen zur Entfernungsmessung an das Autoradiogerät (40) angeschlossen sind, und daß die von der oder den Einrichtungen zur Entfernungsmessung ermittelte Entfernung auf dem Touch-Sreen (TS) dargestellt wird.
